# EUROPÄISCHE PATENTSCHRIFT

(11) **EP 0 719 684 B1**
(45) Veröffentlichungstag und Bekanntmachung des Hinweises auf die Patenterteilung: **20.02.2002**
(21) Anmeldenummer: 95116521.6
(22) Anmeldetag: 20.10.1995
(51) Int. Cl.: B60T 7/12, B60T 13/26

(54) **Vorrichtung zum Verhindern des Wegrollens eines Fahrzeugs**
Device to prevent a vehicle from rolling away
Dispositif empêchant le glissement intempestif d'un véhicule

(30) Priorität: 27.12.1994 DE 4446823
(43) Veröffentlichungstag der Anmeldung: 03.07.1996
(73) Patentinhaber: DaimlerChrysler AG, 70567 Stuttgart (DE)
(72) Erfinder: Spiegelberg, Gernot, Dipl.-Ing., F-67480 Rountzenheim (FR)

(56) Entgegenhaltungen:
- DE-A- 3 621 076
- US-A- 4 446 950

## Beschreibung

Die Erfindung betrifft eine Vorrichtung zum Verhindern des Wegrollens eines Fahrzeugs nach dem Oberbegriff von Anspruch 1, wie sie beispielsweise aus der DE 36 21 076 C2 als bekannt hervorgeht.

Aus dieser Schrift ist es bekannt, bei einem stillstehenden Fahrzeug den von einer Betätigung der Bremse stammenden Bremsdruck aufrechtzuerhalten, bis entweder ein Anfahrvorgang festgestellt wurde oder bis die Feststellbremse des Fahrzeugs betätigt wird. Dabei sind die entsprechenden Steuereinrichtungen unabhängig von der Stellung des Zündschlosses mit einer Stromquelle verbunden. Ferner wird bei dem öffnen der Fahrertür ein Warnsignal erzeugt wenn die Feststellbremse noch immer nicht betätigt ist. Dabei wird das Halten der Bremskraft erst dann beendet, wenn sichergestellt ist, daß der Fahrer die Feststellbremse betätigt hat.

Dadurch ist sichergestellt, daß der Fahrer die Feststellbremse vor dem Verlassen des Fahrzeugs aktiviert und somit das Fahrzeug nicht ins Rollen kommt. Bei am Hang stillgesetzten Fahrzeugen kann es bei Unachtsamkeit des Fahrers oder durch fremde Personen, beispielsweise durch Kinder, geschehen, daß die Handbremse erneut gelöst wird und das Fahrzeug wegrollt.

Aufgabe der Erfindung ist es, die gattungsgemäß zugrundegelegte Vorrichtung zum Verhindern des Wegrollens eines Fahrzeugs dahingehend zu verbessern, daß bei ordnungsgemäß stillgesetzten Fahrzeugen ein nicht beabsichtigtes Wegrollen des Fahrzeugs bei einem Lösen der Feststellbremse nicht stattfindet.

Diese Aufgabe wird bei Zugrundelegung der gattungsgemäßen Vorrichtung zum Verhindern des Wegrollens eines Fahrzeugs erfindungsgemäß durch die kennzeichnenden Merkmale von Anspruch 1 gelöst.

Es ist notwendig, daß das Fahrzeug einen Druckspeicher aufweist, der es erlaubt, Bremskraft auch dann zu erzeugen, wenn der Motor des Fahrzeugs nicht in Betrieb ist und eine von seinem Betrieb abhängige Druckquelle nicht zur Verfügung steht. Ein solcher Druckspeicher ist in der Regel bei Nutzfahrzeugen mit pneumatischen Überdruckbremsanlagen vorhanden, weshalb solche Bremsanlagen ohne großen Aufwand zur Durchführung der Erfindung geeignet sind. Wird bei einem ordnungsgemäß, das heißt mit betätigter Feststellbremse, abgestellten Fahrzeug festgestellt daß die Feststellbremse gelöst wird, so wird ein den Stillstand des Fahrzeugs sicherstellender Bremsdruck erzeugt. Dies geschieht dadurch, daß von der Steuereinrichtung Schaltventile betätigt werden. Dadurch wird eine fluidische Verbindung zwischen dem Druckspeicher und Radbremsen hergestellt. Diese fluidische Verbindung wird solange aufrechterhalten, bis ein den Stillstand des Fahrzeugs sicherstellender Bremsdruck in den Radbremszylindern aufgebracht wird.

Gemäß einer Ausgestaltung der Erfindung wird weiter überprüft ob der Motor des Fahrzeugs in Betrieb ist, ein Gang eingelegt und die Kupplung betätigt ist. Ist dies der Fall, so wird auf ein bewußt und vom Fahrer überwachtes Lösen der Feststellbremse geschlossen und auf die Erzeugung eines Bremsdrucks verzichtet.

Im übrigen kann gemäß einer weiteren Ausgestaltung der Erfindung auch überprüft werden, ob eine Betätigung des Bremspedals erfolgt, die ausreicht um den Stillstand des Fahrzeugs sicherzustellen. Dieser Bremsdruck wird bei aktivierter Rollfunktion nach Lösen des Bremspedals weiter in den Radbremsen gehalten, bzw. anteilig um den zusätzlich notwendigen Bremsdruckaufwand des Anhängers entsprechend erhöht.

Gemäß einer weiteren Ausgestaltung der Erfindung wird der erzeugte Bremsdruck dann wieder abgebaut, wenn entweder erneut die Feststellbremse betätigt wird oder wenn die Steuereinrichtung aus den ihr zugeführten Signalen einen Anfahrvorgang erkennt. Dabei ist es bei Wegrollverhinderern üblich auf einen Anfahrvorgang zu schließen, wenn bei laufendem Motor ein Schließen der Kupplung bei eingelegtem Gang erfolgt.

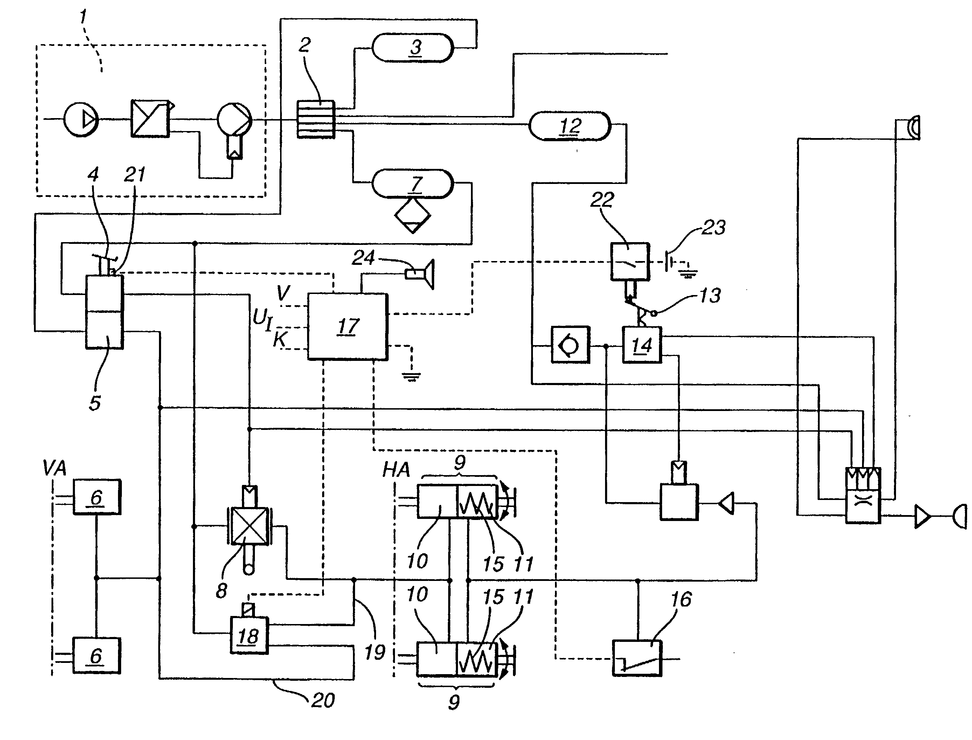

Weitere zweckmäßige Ausgestaltungen der Erfindung können den Unteransprüchen entnommen werden; im übrigen ist die Erfindung an Hand eines in der Zeichnung dargestellten Ausführungsbeispieles nachfolgend noch erläutert; dabei zeigt die einzige Figur eine schematische Darstellung einer Bremsanlage eines Lastkraftwagens mit einer erfindungsgemäßen Vorrichtung.

In der Figur ist eine Zweikreis- Niederdruck-Bremsanlage eines Nutzfahrzeugs dargestellt. Die Bremsanlage weist eine Druckerzeugungseinrichtung 1 auf, die während des Betriebs des Fahrzeugs den Betriebsdruck der Bremsanlage erzeugt. Über das Vierkreis-Schutzventil 2 wird der Betriebsdruck auf die beiden Bremskreise, auf den Bremskreis der Feststellbremsanlage sowie an die Nebenaggregate verteilt.

Der Bremskreis für die Vorderachse VA mit den Bremszylindern 6 wird wenn das Betriebsbremspedal 4 betätigt ist, gesteuert durch das Betriebsbremsventil 5 mit Druckluft aus dem Druckspeicher 3 versorgt.

An der Hinterachse HA sind sogenannte Kombibremszylinder 9 angeordnet, die sowohl die Betriebsbremsfunktion als auch die Feststellbremsfunktion übernehmen. In der Funktionsweise als Betriebsbremse wird eine Bremskraft erzeugt, wenn in einem Bremszylinder 10 Bremsdruck aufgebaut wird. Dies ist dann der Fall, wenn durch Betätigung des Bremspedals 4 das Betriebsbremsventil 5 betätigt und damit eine Drucksollwertvorgabe an die Bremsanlage ausgegeben wird und über den Bremskraftregler 8 oder bei einer elektropneumatischen Bremsdruckregelung über die Druckregelkreise Bremsfluid aus dem Druckspeicher 7 in den Bremszylinder 10 des Kombibremszylinders 9 und des Vorderachszylinders 6 gelangt. Die Feststellbremse ist aus einem Federspeicher 11 gebildet, der bei nicht betätigtem Feststellbremshebel 13 mit dem Druckspeicher 12 fluidisch verbunden ist. Durch den im Federspeicher anstehenden Druck wird die Feder 15 des Federspeichers 11 gespannt und die Feststellbremse gelöst. Sobald der Druck in dem Druckspeicher 12 abfällt, oder der Feststellbremshebel 13 betätigt wird, wird der Federspeicher 11 entlüftet. Die Feder 15 im Federspeicher 11 entspannt sich und betätigt die in der Zeichnung nicht dargestellte Bremse, die in unserem Beispiel nur an der Hinterachse angreift. Dabei betätigt der Kombibremszylinder 9 sowohl in seiner Funktion als Betriebsbremse als auch in seiner Funktion als Feststellbremse die selbe Bremse an den Rädern der Hinterachse HA.

Über die Prüfeinrichtung 16 wird festgestellt, ob der Druck im Federspeicher 11 so groß ist, daß die Bremse gelöst ist. Ein entsprechendes Signal erfolgt an die Steuereinrichtung 17. Der Steuereinrichtung 17 werden auch noch ein die Fahrzeuggeschwindigkeit repräsentierendes Signal v, ein die Stellung der Kupplung repräsentierendes Signal k und den Betrieb des Motors U_{I} repräsentierendes Signal zugeführt.

Wird der Motor abgestellt, so wird beispielsweise das Signal von U_{I} von "1" auf "0" gesetzt. Die Steuereinrichtung überprüft dann, ob die Feststellbremse geschlossen ist. Die Prüfeinrichtung 16 gibt ein Signal "1" sobald der Druck in den Federspeichern abgefallen ist und die Bremse an der Hinterachse HA durch die Wirkung der Feder 15 geschlossen ist. Ist dies nicht der Fall so wird durch das Schaltventil 18 durch die Steuereinrichtung 17 geöffnet und dadurch in dem Bremszylinder 10 des Kombibremszylinders 9 ein Bremsdruck erzeugt. Solange auf diese Art Bremsdruck erzeugt wird, wird über den Lautsprecher 24 ein Warnsignal für den Fahrer erzeugt. Dies führt zu einem Schließen der Bremse an den Achsen des Zugfahrzeugs. Auch bei laufendem Motor kann bei bestimmten Betriebszuständen das Schaltventil 18 durch die Steuereinrichtung 17 betätigt werden, wie dies bei sogenannten Wegrollsperren, wie beispielsweise in der gattungsbildend zugrundegelegten DE 36 21 076 C2 beschrieben, üblich ist. In der dargestellten Ausführung ist das Schaltventil 18 nicht nur über die Druckleitung 19 mit den Bremszylindern 6 der Hinterachse HA fluidisch verbunden, sondern über die Druckleitung 20 auch mit den Bremszylindern 6 der Vorderachse VA. Dadurch wird bei betätigtem Ventil 18 nicht nur an der Hinterachse HA, sondern auch an der Vorderachse VA Bremsdruck aufgebaut. Als zusätzliches Signal wird der Steuereinrichtung 17 das Signal eines Sensors 21 übermittelt, der die Betätigung des Bremspedals 4 feststellt.

Unabhängig von dem Betriebszustand des Fahrzeugs wird bei einem Lösen der Feststellbremse durch den Wechsel des Signals der Prüfeinrichtung 16 von dem Wert "1" auf den Wert "0" überprüft, ob ein Abbauen der Bremskraft zulässig ist oder nicht. Ein Abbauen der Bremskraft wird nur dann als zulässig erkannt, wenn
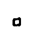 entweder über den Sensor 21 festgestellt wird, daß das Bremspedal 4 soweit betätigt ist, daß eine Mindestbremskraft aufgebracht wird
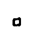 oder wenn auf einen Anfahrvorgang geschlossen wird. Auf einen Anfahrvorgang wird beispielsweise dann geschlossen, wenn bei laufendem Motor ein Gang eingelegt und die Kupplung ist.

Solange durch die Betätigung des Bremspedals die vorgegebene Mindestbremskraft aufgebracht wird, ist ein zusätzlicher Bremseingriff nicht erforderlich. Es spart Vorratsdruck in dem Druckspeicher 7, wenn zumindest solange wie diese Bremskraft erbracht wird, kein Bremsdruck durch die Steuereinrichtung 17 erzeugt wird. Ferner ist es eine übliche Handlungsweise beim Starten eines Fahrzeugs, vor dem Lösen der Feststellbremse die Betriebsbremse 4 zu betätigen. Die Mindestbremskraft kann dabei als Minimum des zurückzulegenden Pedalwegs angegeben sein. Die Mindestbremskraft muß dazu ausreichen das maximale Fahrzeuggewicht einschließlich Zuladung sicher im Stillstand zu halten. Die Mindestbremskraft kann sicherheitshalber auch der maximalen Bremskraft entsprechen bzw. der entsprechende Mindestpedalweg dem zur Erzeugung eines maximalen Bremsdrucks erforderlichen Pedalweg. Alternativ zur Erfassung der Betätigung des Bremspedals 4 könnte auch der in den Radbremszylindern 10 erzeugte Bremsdruck erfaßt werden.

Als Vorteil erweist sich dabei, daß ein Lösen der Feststellbremse 11 voraussetzt, daß in dem Druckspeicher 15 noch ausreichend Druck vorhanden ist um die Federkraft der Feder 15 des Federspeichers 11 zu überdrücken und die Feststellbremse vollständig zu lösen. Ist dies nicht der Fall, so bleibt eine Restbremswirkung der Feststellbremse vorhanden. Über die Prüfeinrichtung 16 wird dieser Fall festgestellt und über eine Warneinrichtung dem Fahrer angezeigt.

Die Stromversorgung der Steuereinrichtung 17 muß auch dann sichergestellt sein, wenn die Zündung des Fahrzeugs ausgeschaltet ist. Sie ist aber solange nicht notwendig, wie die Feststellbremse betätigt ist, also durch die Federspeicher 11 Bremskraft erzeugt wird. Daher wird durch den Schalter 22 von der Stellung des Zündschalters unabhängige Stromversorgung durch die Stromquelle unterbrochen, sobald der Feststellbremshebel 13 in eine Stellung gebracht wird, die einer betätigten Feststellbremse entspricht. Sobald der Feststellbremshebel 13 in eine Stellung gebracht wird, die einer nicht betätigten Feststellbremse, also einer gelösten Feststellbremse, entspricht, wird die Stromversorgung wieder geschlossen.

Eine entsprechende Anordnung kann auch in Personenkraftwagen verwendet werden. Dazu muß das Fahrzeug einen Druckspeicher zur Erzeugung von Bremskraft aufweisen, der unabhängig ist von dem Motor des Fahrzeugs. Sofern eine Antriebsschlupfregelung mit einem Speicher für Bremsmedium vorhanden ist, kann diese dabei verwendet werden. Ebenfalls kann eine erfindungsgemäße Vorrichtung bei Fahrzeugen mit elektropneumatischer Bremsanlage erfolgen. Die Regelung der Bremsdrücke erfolgt dann über die zugehörigen Bremsdruckregelkreise.

## Patentansprüche

1. Vorrichtung zum Verhindern des Wegrollens eines Fahrzeugs, mit einer
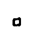 einen Druckspeicher und
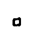 eine Steuereinrichtung (17) zum gesteuerten Aufbauen und gesteuerten Abbauen von Bremsdruck in Radbremsen beinhaltenden Bremsanlage,
wobei der Steuereinrichtung (17) ein die Betätigung der Feststellbremse repräsentierendes Signal zugeführt wird und wobei die Steuereinrichtung (17) unabhängig von der Schaltstellung eines Zündschalters bestromt ist,
**dadurch gekennzeichnet,**
**daß** durch die Steuereinrichtung beim Lösen der Feststellbremse ein den Stillstand des Fahrzeugs sicherstellender Bremsdruck durch Öffnen von Schaltventilen (15), die die Radbremszylinder (10) fluidisch mit dem Druckspeicher (12) verbinden, in Radbremszylindern (10) aufgebaut wird.

2. Vorrichtung nach Anspruch 1,
**dadurch gekennzeichnet,**
**daß** ein Bremsdruck nicht erzeugt wird, wenn beim Lösen der Feststellbremse festgestellt wird, daß der Motor läuft, ein Gang eingelegt und die Kupplung geöffnet ist.

3. Vorrichtung nach Anspruch 1,
**dadurch gekennzeichnet,**
**daß** die Steuereinrichtung (17) durch Betätigen von die Radbremszylinder (10) entlüftenden Ventilen den aufgebauten Bremsdruck abbaut wenn entweder
das die Betätigung der Feststellbremse repräsentierende Signal einer angelegten Stellung der Feststellbremse entspricht oder wenn bei laufendem Motor die Kupplung im Schließsinn betätigt wird.

4. Vorrichtung nach Anspruch 1,
**dadurch gekennzeichnet,**
**daß** die Feststellbremse im Schließsinn vorgespannt und durch Beaufschlagung eines Federspeichers (11) mit Bremsfluid lösbar ist und daß beim von der Steuereinrichtung (17) veranlaßten Aufbau von Bremsdruck in Radbremsen auch eine fluidische Verbindung zwischen dem Druckspeicher und dem Federspeicher (11) hergestellt wird.

5. Vorrichtung nach Anspruch 1,
**dadurch gekennzeichnet**, Aufbau von
daß beim durch die Steuereinrichtung (17) veranlaßten Aufbau von Bremsdruck in Radbremsen ein optisches und/oder akustisches Warnsignal aktiviert wird.

6. Vorrichtung nach Anspruch 1,
**dadurch gekennzeichnet,**
**daß** die Betätigung des Bremspedals (4) erfaßt wird und daß dann, wenn aufgrund der Stellung des Bremspedals (4) ein zumindest den Stillstand des Fahrzeugs sicherstellender Bremsdruck aufgebaut wird, eine Betätigung der Schaltventile (18) durch die Steuereinrichtung (17) unterbleibt.

7. Vorrichtung nach Anspruch 1,
**dadurch gekennzeichnet,**
**daß** der aufgebaute Bremsdruck abgebaut wird, wenn entweder die Feststellbremse erneut betätigt wird oder wenn in der Steuereinrichtung (17) ein Anfahrvorgang erkannt wird.

8. Vorrichtung nach Anspruch 1,
**dadurch gekennzeichnet,**
**daß** die Stromversorgung der Steuereinrichtung (17) durch die Stellung des Feststellbremshebels (13) bestimmt ist, wobei bei einer Stellung des Feststellbremshebels (13) die einer betätigten Feststellbremse entspricht, die Stromversorgung unterbrochen ist und wobei die Stromversorgung der Steuereinrichtung (17) geschlossen ist, wenn die Stellung des Feststellbremshebels (13) einer unbetätigten Feststellbremse entspricht.

## Claims

1. Device for preventing a vehicle from rolling away with a braking installation comprising
a pressurised storage device and
a control device (17) for the controlled pressure build-up and controlled pressure drop in wheel brakes,
wherein a signal representing the activation of the parking brake is fed to the control device (17) and
wherein the control device (17) is provided with current independently of the on/off position of an ignition starter switch,
**characterised in that**
through the control device upon releasing of the parking brake a brake pressure ensuring that the vehicle remains at a standstill is built up in wheel brake cylinders (10) through opening of on/off valves which connect the wheel brake cylinders (10) in a fluid way with the pressure storage device (12).

2. Device according to claim 1
**characterised in that**
a brake pressure is not produced if upon release of the parking brake it is ascertained that the engine is running, a gear is engaged and the clutch is open.

3. Device according to claim 1
**characterised in that**
the control device (17) through activation of valves ventilating the wheel brake cylinders (10) decreases the brake pressure which has built up if either the signal representing the activation of the parking brake corresponds to a set position of the parking brake or if the clutch is activated in the closed sense when the engine is running.

4. Device according to claim 1
**characterised in that**
the parking brake is pre-tensioned in the closed sense and can be released through impacting of a spring storage device (11) with brake fluid and that in the event of build-up of brake pressure in wheel brakes triggered by the control device (17) a fluid connection is also produced between the pressure storage device and the spring storage device (11).

5. Device according to claim 1
**characterised in that**
in the event of the build-up of brake pressure in wheel brakes triggered by the control device (17) an optical and/or acoustic warning signal is activated.

6. Device according to claim 1
**characterised in that**
the activation of the brake pedal (4) is registered and that then if due to the position of the brake pedal (4) a brake pressure is built up at least corresponding to that which maintains the vehicle at a standstill an activation of the on/off valves (18) through the control device (17) ceases.

7. Device according to claim 1
**characterised in that**
the brake pressure which has built up is decreased if either the parking brake is activated again or if a pulling up process is recognised in the control device (17).

8. Device according to claim 1
**characterised in that**
the current supply of the control device (17) is determined through the position of the parking brake lever (13), wherein in a position of the parking brake lever (13) which corresponds to an activated parking brake the current supply is interrupted and wherein the current supply of the control device (17) is closed if the position of the parking brake lever (13) corresponds to a non-activated parking brake.

## Revendications

1. Dispositif pour empêcher le départ d'un véhicule, comportant :
◆ un accumulateur de pression, et
◆ un dispositif de commande (17) pour l'établissement commandé et la suppression commandée de la pression de freinage dans une installation de freinage contenant des freins de roues,
dans lequel un signal représentant l'actionnement du frein de stationnement est envoyé au dispositif de commande (17) et le dispositif de commande (17) est alimenté en courant indépendamment de la position de commutation d'une clé de contact,
**caractérisé en ce que** lors du desserrage du frein de stationnement, une pression de freinage, qui assure l'état d'arrêt du véhicule, est établie par le dispositif de commande dans les cylindres (10) des freins de roues par ouverture de soupapes de commutation (18), qui relient fluidiquement les cylindres (10) des freins de roues à l'accumulateur de pression (12).

2. Dispositif selon la revendication 1, **caractérisé en ce qu'**une pression de freinage n'est pas produite lorsque, lors du desserrage du frein de stationnement, il est établi que le moteur tourne, qu'une vitesse est engagée et que l'embrayage est ouvert.

3. Dispositif selon la revendication 1, **caractérisé en ce que** le dispositif de commande (17) annule la pression de freinage établie, par actionnement de soupapes purgeant les cylindres (10) des freins de roues lorsque soit le signal, qul représente l'actionnement du frein de stationnement, correspond à une position serrée du frein de stationnement, soit, alors que le moteur tourne, l'embrayage est actionné dans le sens de la fermeture.

4. Dispositif selon la revendication 1, **caractérisé en ce que** le frein de stationnement est précontraint dans le sens de la fermeture et peut être desserré par chargement d'un accumulateur à ressort (11) avec du fluide de frein, et que dans le cas de l'établissement, déclenché par le dispositif de commande (17), de la pression de freinage dans des freins de roues, une liaison fluidique est également établie entre l'accumulateur de pression et l'accumulateur à ressort (11).

5. Dispositif selon la revendication 1, **caractérisé en ce qu'**un signal d'avertissement optique et/ou acoustique est activé lors de l'établissement, déclenché par le dispositif de commande (17), de la pression de freinage dans des freins de roues.

6. Dispositif selon la revendication 1, **caractérisé en ce que** l'actionnement de la pédale de frein (4) est détecté et qu'alors, lorsqu'une pression de freinage garantissant au moins l'état d'arrêt du véhicule est établie sur la base de la position de la pédale de frein (4), un actionnement des soupapes de commutation (18) par le dispositif de commande (17) cesse.

7. Dispositif selon la revendication 1, **caractérisé en ce que** la pression de freinage établie est supprimée lorsque soit le frein de stationnement est à nouveau actionné, soit un processus de démarrage est identifié dans le dispositif de commande (17).

8. Dispositif selon la revendication 1, **caractérisé en ce que** l'alimentation en courant du dispositif de commande (17) est déterminée par la position du levier de frein de stationnement (13), ce en quoi, dans une position du levier de frein de stationnement (13), qui correspond à un frein de stationnement actionné, l'alimentation en courant est interrompue et, lorsque la position du levier de frein de stationnement (23) correspond au cas où le frein de stationnement n'est pas actionné, l'alimentation en courant du dispositif de commande (17) est fermée.
